Europäisches Patentamt

European Patent Office

Office européen des brevets

(19)

(11) **EP 0 571 107 B1**

(12) **EUROPEAN PATENT SPECIFICATION**

(45) Date of publication and mention
of the grant of the patent:
**07.01.1998 Bulletin 1998/02**

(51) Int Cl.[6]: **G01L 1/24**, G01L 9/00

(21) Application number: **93303505.7**

(22) Date of filing: **06.05.1993**

(54) **Optical force transducer based on a Fabry-Perot resonator, with a sweeping Fabry-Perot resonator as an element of the transducing part**

Optischer Kraftwandler mit Fabry-Perot Resonator und einem weiteren abtastendem Fabry-Perot Resonator

Transducteur optique de force à résonateur Fabry-Perot, comportant un résonateur Fabry-Perot balayant auxiliaire

(84) Designated Contracting States:
**DE ES FR GB IT SE**

(30) Priority: **19.05.1992 FI 922263**

(43) Date of publication of application:
**24.11.1993 Bulletin 1993/47**

(73) Proprietor: **VAISALA TECHNOLOGIES INC., OY**
**01670 Vantaa (FI)**

(72) Inventors:
• **Lehto, Ari**
**SF-00700 Helsinki (FI)**
• **Orpana, Markku**
**SF-02340 Espoo (FI)**
• **Korhonen, Anssi**
**SF-00700 Helsinki (FI)**
• **Tammela, Simo**
**SF-02130 Espoo (FI)**

(74) Representative: **Jennings, Nigel Robin et al**
**KILBURN & STRODE**
**30 John Street**
**London WC1N 2DD (GB)**

(56) References cited:
WO-A-87/02470           DE-A- 3 816 529
GB-A- 2 217 839

• **REVIEW OF SCIENTIFIC INSTRUMENTS vol. 58,**
**no. 8, September 1987, NEW YORK pages 1655 -**
**1659 G. BEHEIM 'Fiber-linked interferrometric**
**pressure sensor'**

**Description**

The present invention is related to an optical force transducer according to the preamble of claim 1.

The invention is principally intended for applications in the measurement of absolute pressure, differential pressure and acceleration. It is also suited to the measurement of force.

Temperature and pressure are the most common measurement variables in industrial processes. Pressure transducers have been rapidly developed toward ever smaller size and higher performance. This can be mostly attributed to the application of silicon technology from microelectronics to silicon-based transducers.

Silicon has excellent mechanical properties as it obeys Hooke's law up to the breaking stress and is hysteresis-free at temperatures below 600 °C. An oxide or nitride can be grown onto silicon, whereby it becomes chemically resistant.

Transducers are based on both static and vibrating structures. Pressure change is conventionally detected in static structures by virtue of the piezoresistive effect, change of capacitance or change of optical intensity. A piezoresistive transducer draws upon the electrical and mechanical properties of silicon, while a capacitive or optical transducer utilizes the mechanical properties of silicon alone.

Temperature dependence of sensitivity and offset drift is appreciably smaller in a capacitive transducer than in a piezoresistive transducer. The capacitive transducer also has superior performance at low pressure ranges.

B. Culshaw[1] has disclosed an optically-sensing pressure transducer based on silicon technology, the interior of said transducer containing a mechanically vibrating bridge whose tensional stress is related to the imposed pressure. The resonant frequency of the bridge is a function of the tensional stress, and the output signal from the transducer is directly the resonant frequency of the bridge.

The output frequency of the sensing element can be measured with a high accuracy. Another advantage of the construction is the operation of the sensing element itself without electrical connections. The sensing element is enclosed in a vacuum to attain a sufficiently high Q-factor for the vibrating element. This property, however, bears the disadvantage that the transducer is unsuited to differential pressure measurement, since the reference pressure necessary in such an application must be applied to the interior of the transducer. Such a transducer is also sensitive to shocks that can change the vibrating mode of the sensing element.

The vibrating transducer operates with the less exciting power the higher the Q-factor of the vibrating element. The Q-factor is typically elevated by bringing the interior of the transducer to a vacuum. This has the corollary that these prior-art transducers cannot be used in differential pressure measurements as this would permit the vibrating element to be surrounded by the gas atmosphere of the reference pressure, thereby causing the Q-factor of the element to fall to an unacceptably small value.

I.A. Dziuban et al.[2] have disclosed an optically-sensing pressure transducer based on silicon technology, said transducer having the end of an optical fiber attached to a diaphragm made of single-crystal silicon. With a change of the imposed pressure, the diaphragm is deflected, as well as the attached fiber. The fiber end is located close to a detector so that the intensity of light falling on the detector will be dependent on the position of the fiber end relative to the detector. The transducer output signal is available as voltage or current caused by the light impinging on the detector.

The above embodiment suffers from the sensitivity of the output signal to intensity changes of the light source, thus requiring the use of a reference channel for compensation. The publication by the authors does not disclose any method for implementing such compensation. Another disadvantage is the high temperature sensitivity of the detector output signal, whereby sensing of transducer internal temperature is necessary for compensation.

In an article entitled "Fiber-linked Interferometric Pressure Sensor" by G Beheim, K Fritsch and R N Poorman published in 8127 Review of Scientific Instruments 58 (1987) September, No 8, New York, NY, USA, a fibre optic pressure sensor is described including a first Fabry-Perot cavity and a tunable Fabry-Perot cavity.

DE 3816529 describes a pressure measuring apparatus based on the principle of a Fabry-Perot interferometer.

GB 2217839 relates to an optical sensor comprising a first Fabry-Perot device and a second Fabry-Perot device functioning as a reference standard.

WO 87/024470 refers to a Fabry-Perot interferometer comprising a single crystal silicon substrate including a diaphragm which is movable to allow tuning.

It is an object of the present invention to overcome the above-described disadvantages of prior-art technology and to achieve an entirely novel type of optical force transducer.

The present invention discloses a force transducer applicable to the measurement of pressure and acceleration, said transducer incorporating both a static and a deflectable structure.

The invention is based on forming a Fabry-Perot resonator as an integral part of the transducer and then detecting the resonant wavelength of the first resonator by means of a separate Fabry-Perot resonator operated at a variable resonant wavelength.

More specifically, the transducer according to the invention is characterized by what is stated in the characterizing part of claim 1.

The invention provides significant benefits.

Namely, the transducer according to the invention is generic by character as the transducing part of the transducer, which is comprised by a sweeping Fabry-Perot resonator, can be identical for all desired force ranges to be measured. The stiffness of the deflectable sensing reflector in the sensing resonator, can be dimensioned by, e.g., varying its thickness so that the deflection of the moving reflector remains the same with a certain relative value of the external force irrespective of the maximum value of the measurement range. Then, the sweeping resonator is always operated in the same wavelength range.

The transducer according to the invention has excellent shock resistance as it contains no vibrating element damageable by a shock. A conventional transducer can also resonate with vibrations from the environment, particularly those having a frequency close to a resonant frequency of the vibrating element in the conventional transducer. By contrast, the transducer according to the invention can be designed for a very high resonant frequency of the diaphragm moving under pressure, so any possible effect of external vibration will be evidenced only as widening of spectral lines on the light-sensitive area of the linear array sensor. This, however, does not prevent the detection of minima in the spectrum.

The electronics enclosure which houses the transducing part of the transducer according to the invention is rarely subjected to such shocks as sensing part proper.

The transducer according to the invention uses a wide-spectrum light source such as, e.g., a miniature incandescent bulb or an LED. These are lower-priced components than for instance a laser and any shift in their wavelength spectrum due to temperature variations does not deteriorate the function of the transducer as could occur with the use of a laser.

The use of a wide-spectrum light source also achieves minimization of fiber-related disturbance effects on the measurement.

The transducer according to the invention is tolerant to variations in the output intensity of the light source without compromising the measurement accuracy of the transducer. This is because the detection is based on resolving spectral minima or maxima of the intensity signal, not the absolute value of intensity.

The embodiment according to the invention obviates the need for a high vacuum in the transducer chamber for attaining an optimal Q-factor, because the sensing diaphragm does not vibrate. Measurement of differential pressure is simply achieved by applying the reference pressure to the interior of the resonator.

With the exception of the vibrating element types, prior-art transducers are suitable for the measurement of acceleration. A vibrating element can only be operated under tensional stress, thus making it inapplicable to the measurement of a force which can cause compressive stress on the element. Such transducers whose interior is in a vacuum cannot, however, be provided with a sensitive diaphragm, because the diaphragm must be capable of withstanding the ambient pressure. The present invention is free from this limitation, since the moving reflector diaphragm of the optical resonator can be made extremely agile if both sides of diaphragm are operated at equal pressure. When a particularly sensitive acceleration transducer is desired, the reflector diaphragm of the resonator is advantageously provided with an additional mass.

In the following the invention is examined in greater detail with reference to exemplifying embodiments illustrated in the annexed drawing in which

Fig. 1 shows in graphical form and for background information the function of the optical resonators in a transducer not in accordance with the present invention.

Fig. 2 shows diagrammatically for background information a transducer not in accordance with the invention.

Fig. 3 shows for background information an alternative embodiment for the transducer structure illustrated in Fig. 1 also not in accordance with the present invention.

Fig. 4 show for background information another alternative embodiment for the transducer structure illustrated in Fig. 1, also not in accordance with the present invention.

Fig. 5 shows for background information still another alternative embodiment for the transducer structure illustrated in Fig. 1, also not in accordance with the invention.

Fig. 6 shows an embodiment in accordance with the present invention for the transducer structure illustrated in Fig. 1.

Fig. 7 shows a sensing Fabry-Perot resonator according to the invention in a longitudinally sectioned side view.

Fig. 8 shows in a longitudinally sectioned side view a sweeping Fabry-Perot resonator according to the invention.

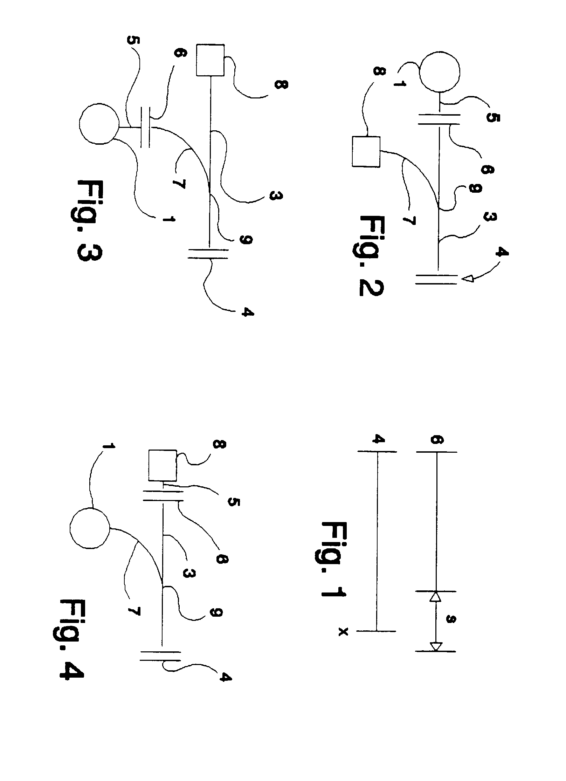

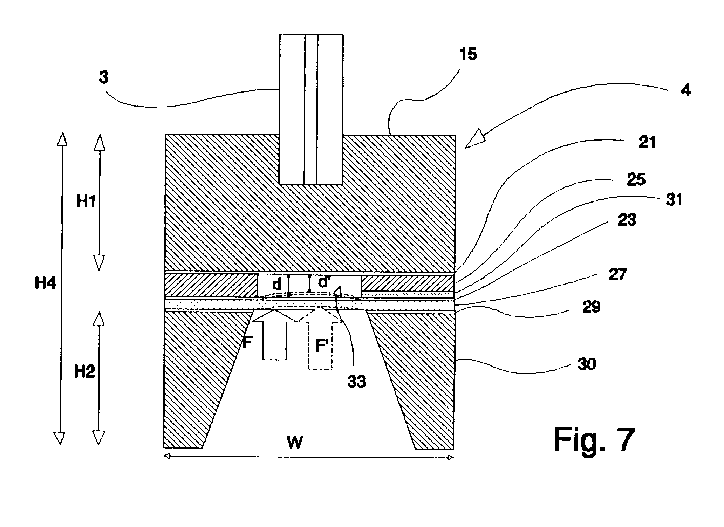

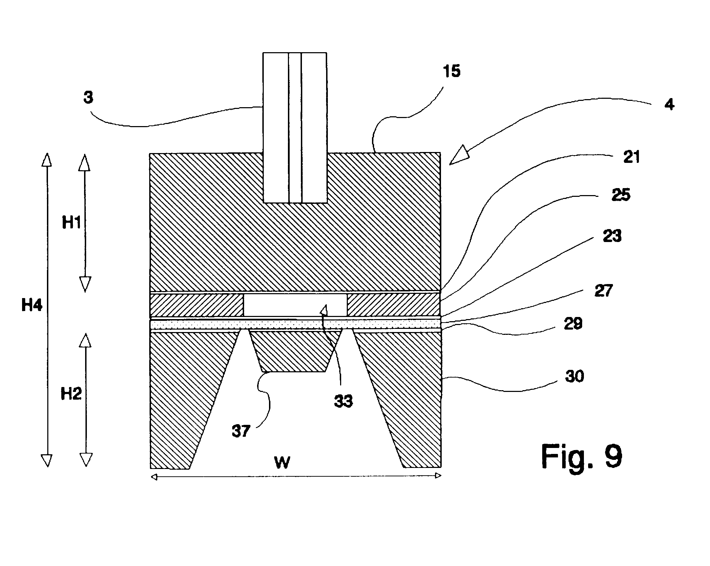

Figure 9 shows in a longitudinally sectioned side view an alternative accelerometer-type embodiment for the sensing optical resonator illustrated in Fig. 7. The embodiments described herebelow in relation to Figs. 1 to 5 are described for the purposes of background information only and are not in accordance with the invention. With reference to Fig. 1, as the sweeping range s is designed to sweep over the optical length x of the sensing resonator 4, the detector 8 indicates an intensity minimum every time the optical lengths of the resonators 4 and 6 are coincident. Due to the cyclically repetitive sweep of the sweeping resonator 6 over the length range s, the optical length of the sensing resonator 4 is resolved from the phase angle of the sweeping resonator 6 at the detected minimum. The optical length of the sensing resonator 4 is varied by the effect of an imposed force such as pressure, for instance, and because the stiffness the of the structure is known, the magnitude of the imposed force can be computed from the change in the resonator optical length. Consequently, the apparatus must be provided with phase-detecting elements that can resolve the phase angle of the sweeping resonator 6 at the detected intensity minimum or maximum. The detected phase angle indicates directly the optical length of the sweeping resonator 4, thus permitting computation of the imposed force. The light source 1 can be any wide-spectrum such as an incandescent lamp or LED.

With reference to Fig. 2, a ray of white light is transmitted from a light source 1 along an optical fiber 5 first through a sweepinig resonator and therefrom along a main fiber 3 to the sensing resonator structure 4. This structure reflects all the light except for one or more narrow wavelength bands. Thus, the sensing resonator structure 4 acts a bandstop filter. The reflected spectrum of light is transmitted back along the main fiber 3 to a branchiiig coupler 9, wherefrom a portion of the light is routed along a branch fiber 7 to a detector 8. The sweeping resonator 6 attenuates strongly all other wavelengths except those falling in resonance with resonator, thus acting as a bandpass filter.

With reference to Fig. 3, the light source 1 and the sweeping resonator 6 are placed along the branch fiber 7. In principle this embodiment is identical to that illustrated in Fig. 2.

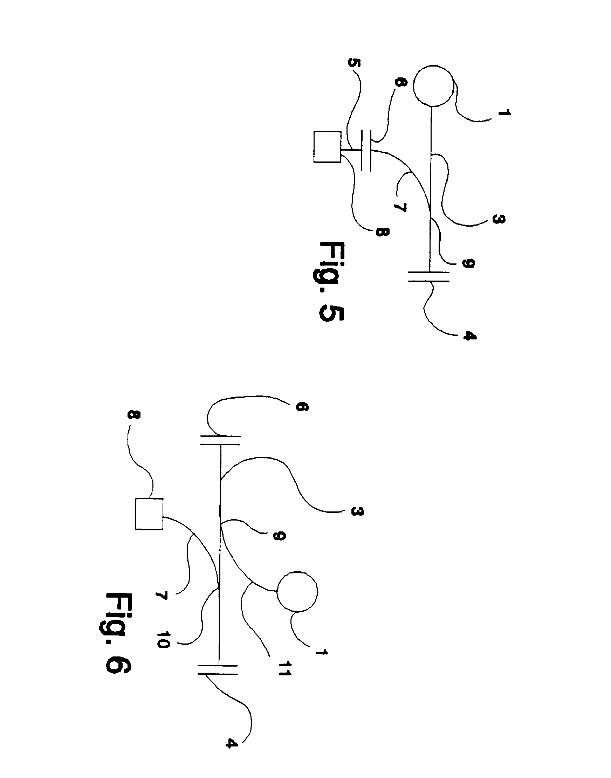

With reference to Fig. 4, the transducer according to the invention can be implemented so that the light source 1 alone is placed at the end of the branch fiber 7, and the ray of light is thus routed directly via the branching coupler 9 to the sensing resonator 4. In this embodiment only the return spectrum of bandpass-filtered light is bandpass-filtered in the sweeping resonator 6. If desired, the detector 8 can be directly integrated to the resonator 6, whereby the linking fiber 5 can be omitted.

With reference to Fig. 5, the elements placed according to Fig. 4 along the main fiber 3 and the branch fiber 7 can be interchanged.

With reference to Fig. 6, the sensing resonator 4 and the sweeping resonator 6 are placed at the ends of the main fiber 3. The ray of light is routed from the light source along the branch fiber 11 first to the sweeping resonator 6 that in this embodiment acts as a reflecting resonator and thus performs bandstop filtration. The ray of light travels next down to the other end of the main fiber 3, and therefrom, to the sensing resonator 4. When the optical lengths of the resonators 4 and 5 become equal, an intensity maximum is sent via the branching coupler 10 along the branch fiber 7 to the detector.

With reference to Fig. 7, a ray of light is routed along a light conductor formed by an optical fiber 3 into the transducer structure 4. The transducer structure 4 is comprised of a body part 15 and an integral actuated sensing diaphragm 27 of such a small thickness that an external force F applied onto the diaphragm can cause a measurable change in the distance between said diaphragm 27 and the body part of the transducer structure. Hence, the actuated diaphragm 27 can be considered an element springedly attached to the transducer body part 15. The ray of light launched from the optical fiber 3 is transmitted through the light-transparent section of the body part 15 so as to first impinge on a partially transmissive reflector 21 integral with the body part 15, through which reflector a portion of the light is transmitted into a resonator space 33 and through the space to impinge on a reflector surface 23 on the actuated sensing membrane. Those wavelength components of a wide-spectrum light, for whom the resonator optical length d is equal to an integral number of half-wavelengths, the attenuation will be high; so such wavelengths can be detected as absorption maxima in the return signal received from the optical fiber 3. When a larger force F' is applied onto the actuated diaphragm 27, the distance between the diaphragm 27 and the transducer body part will be reduced to a value d', whereby new absorption maxima are detected.

In commercial fabrication the transducer structure 4 illustrated in Fig. 2 is made through a conventional thin-film deposition process in which a substrate 15 of monocrystalline silicon is covered with a partially transmissive metal film 21. Next, onto the metal film 21 is grown a silicon dioxide layer 25, whose thickness determines the basic height of the resonator space 33. Onto the silicon dioxide layer 25 is then deposited a second metal film 23 whose function is to act as the other reflector of the resonator 33. Onto the metal film 23 is deposited a polycrystalline silicon layer 27 whose thickness and diameter (or edge length) determine the mechanical sensitivity of the transducer 4. Using a suitable method, the silicon dioxide layer 25 is etched to form the resonator space 33. An intermediate layer 29 of, e.g., glass is employed for attaching a protective element 30 to the sensing diaphragm 27 made from polycrystalline silicon. The protective element 30 has a suitable inlet for routing the measured pressure in differential pressure measurements to the interior of the transducer. In absolute pressure measurements the protective element 30 is redundant as the sensing resonator has a similar structure as that of the sweeping resonator. The reference pressure is routed to the resonator via a channel 31, which can be omitted in absolute pressure transducers.

Typical dimensions for a transducer element are given in the following table:

|  | TYPICAL | MIN./MAX. |
|---|---|---|
| H1 | 380 μm | 360...520 μm |

(continued)

|  | TYPICAL | MIN./MAX. |
|---|---|---|
| H2 | 380 μm | 360...520 μm |
| H4 | 760 μm | 720...1040 μm |
| W | 2 mm | 1...3 mm |
| d | 1 μm | 0.6...1.5 μm |
| THICKNESS OF SENSING DIAPHRAGM 27 | 1 μm | 0.7...10 μm |

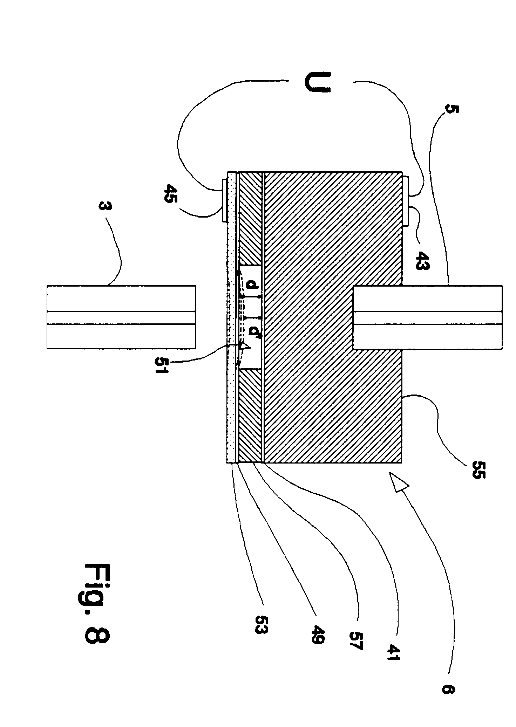

With reference to Fig. 8, the structure of the sweeping resonator 8 is largely similar to that of the sensing resonator illustrated in Fig. 7. The reference numerals of the optical fibers 5 and 3 shown in the diagram correspond to the those used in the diagrams of Figs. 2 and 4. The resonator is comprised of a body part 55, complemented with a metal film 41 acting as a reflector. The edges of the metal film 41 are supported from below by silicon dioxide layer 57 whose thickness determines the optical length d of the resonator cavity 51. Under the silicon dioxide layer 57 is situated a second metal film 49 that acts as the other reflector of the resonator 51. The second metal film 49 is backed by from below by polycrystalline silicon layer 53 acting as the support element for the deflectable layer structure. The body part 55 incorporates a first electrode 43 and the polycrystalline layer carries a second electrode 45, whereby a voltage U imposed over said electrodes accomplishes length adjustment of the resonator 51 between values d - d', for instance. The resonator optical length d is modulated by the effect of the electrostatic pressure $P_s$ determined by the formula

$$P_s = \frac{1}{2}\varepsilon_0 \left(\frac{U}{d}\right)^2$$

Thus, the diaphragm layer 53 can be moved with the help of an applied voltage U.

Multiple different alternative embodiments are possible for determining the magnitude of the force applied on the transducer. For instance, the relationship of the bandpass wavelength of the sweeping resonator illustrated in Fig. 8 with the voltage U can be readily determined by experimental methods. Using similar experimental methods, the relationship of the resonant wavelength of the resonator illustrated in Fig. 7 with the applied pressure can be determined. Thus, the externally applied force or pressure can be ultimately determined from calibration curves when the voltage U corresponding to the intensity minimum or maximum indicated by the measurement system detector 8 is known.

The control of the sweeping resonator can be implemented in multiple different ways. The control electronics can be designed to constantly lock the detector to an intensity minimum (alternatively a maximum), whereby the voltage U follows the applied pressure.

Alternatively, the voltage U can be modulated, whereby the diaphragm 53 is cyclically repetitively deflected between the minimum and maximum wavelengths of the resonator. Then, the detector 8 indicates during each half-cycle one minimum (or maximum), whereby the phase angle of the modulated voltage is related to the instantaneous optical length of the resonator, and thus to the magnitude of applied pressure or force. To indicate the phase angle (or time instant), a microprocessor controlled by a suitable algorithm can be employed for the detection of the intensity minimum.

An exemplifying embodiment of such a computational algorithm is given:

A counter is started when the sweeping resonator is controlled to position 0, that is, at the start of the sweep deflection s (refer to Fig. 1) and stopped when a minimum signal value $I_{min}$ is received from the detector element.

Then,

$$\frac{t}{t_s} = \frac{x}{s}$$

where t is time from time instant zero (= sweep start) to the intensity minimum $I_{min}$, s is the swept optical length and x is the indicated position of the minimum. $t_s$ is the time required for full sweep s.

$$x = \frac{t}{t_s} \times s$$

With reference to Fig. 9, the sensing membrane 27 can be provided with an additional mass 37, whereby the transducer becomes well suited to acceleration measurements.

In manufacturing the entire transducer can be fabricated on a single substrate.

References:

1. B. Culshaw, "Micromachined Silicon - A Synergistic Approach to Optical Fibre Sensing?", Proc. 7th Optical Fibre Sensors Conference, Dec. 2 - 6, 1990, Sydney, New South Wales.

2. I. A. Dziuban et a., "Silicon Optical Pressure Sensor", Eurosensors V, Book of Abstracts, 30 Sept. - 2 Oct. 1991, Rome.

## Claims

1. A Fabry-Perot-type transducer for measurement of force, said transducer comprising:

   a body part (15);
   a sensing element (27,37) springedly mounted on said body part (15), said actuated sensing element acting as a force-receiving element whose deflection relative to the body part (15) can be employed for computing the force applied onto said sensing element (27,37), and
   an optical detection assembly (1,6,8) for determining the deflection of the sensing element (27,37), wherein said optical detection assembly (1,6,8) comprises
   a wide-spectrum light source (1) optically connected to said sensing resonator (21,23,33),
   an intensity detector (8), optically connected to said light source (1), for detecting the intensity of light altered by said sensing resonator (21,23,33),
   a sweeping Fabry-Perot resonator (41,49,51), optically connected to said sensing resonator (21,23,33) and said light source (1), having a controllable optical length for the purpose of determining the optical length of the sensing resonator (21,23,33) which is proportional to the force (F,F') applied onto the sensing element (27), characterised in that
   both Fabry-Perot interferometers (4,6) are short and operate in reflection mode.

2. A transducer as defined in claim 1, characterized in that said sweeping resonator (41,49,51) is placed along the transmission path of the light ray prior to the sensing resonator (4).

3. A transducer as defined in claim 1, characterized in that said sweeping resonator (41,49,51) incorporates electrostatic deflection elements (43,45).

4. A transducer as defined in any foregoing claim, characterized in that the body part (15) acts as the substrate for the entire transducer.

5. A transducer as defined in claim 1, characterized in that the optical length of said sweeping resonator (41,49,51) is real-time controllable to follow the optical length of the sensing resonator (21,23,33).

6. A transducer as defined in claim 1, characterized in that the optical length of said sweeping resonator (41,49,51) is cyclically controllable.

7. A transducer as defined in claim 6, characterized in that said transducer incorporates phase detection elements capable of resolving the phase angle of a minimum or maximum point in the intensity signal from the sweeping resonator (41,49,51).

## Patentansprüche

1. Ein Fabry-Perot-Typ-Meßwandler zur Messung von Kraft, wobei der Meßwandler aufweist:

   einen Aufbauteil (15);

   ein Abtastelement (27,37), das federnd auf dem Aufbauteil (15) befestigt ist, wobei das betätigte Abtastelement als ein kraftaufnehmendes Element dient, dessen Auslenkung relativ zu dem Aufbauteil (15) zum Berechnen der Kraft verwendet werden kann, die auf das Abtastelement (27,37) wirkt, und

eine optische Erfassungsanordnung (1,6,8) zum Bestimmen der Auslenkung des Abtastelements (27,37), wobei die optische Erfassungsanordnung (1,6,8) aufweist:

eine Lichtquelle (1) mit breitem Spektrum, die mit dem Abtastresonator (21,23,33) optisch verbunden ist,

eine Intensitätserfassungseinrichtung (8), die mit der Lichtquelle (1) optisch verbunden ist, um die Intensität des Lichts, das durch den Abtastresonator (21,23,33) abgeändert wird, zu erkennen,

einen Durchlauf-Fabry-Perot-Resonator (41,49,51), der mit dem Abtastresonator (21,23,33) und der Lichtquelle (1) optisch verbunden ist und eine steuerbare optische Länge zum Zweck der Bestimmung der optischen Länge des Abtastresonators (21,23,33) aufweist, die proportional zu der auf das Abtastelement (27) wirkenden Kraft (F,F') ist, dadurch gekennzeichnet,

daß beide Fabry-Perot-Interferometer (4,6) kurz sind und im Reflexionsmodus arbeiten.

2. Ein Meßwandler nach Anspruch 1, dadurch gekennzeichnet, daß der Durchlaufresonator (41,49,51) entlang des Übertragungsweges des Lichtstrahls vor dem Abtastresonator (4) angeordnet ist.

3. Ein Meßwandler nach Anspruch 1, dadurch gekennzeichnet, daß der Durchlaufresonator (41,49,51) elektrostatische Auslenkelemente (43,45) hat.

4. Ein Meßwandler nach einem vorhergehenden Anspruch, dadurch gekennzeichnet, daß der Aufbauteil (15) als das Substrat für den gesamten Meßwandler dient.

5. Ein Meßwandler nach Anspruch 1, dadurch gekennzeichnet, daß die optische Länge des Durchlaufresonators (41,49,51) in Echtzeit steuerbar ist, um der optischen Länge des Abtastresonators (21,23,33) zu folgen.

6. Ein Meßwandler nach Anspruch 1, dadurch gekennzeichnet, daß die optische Länge des Durchlaufresonators (41,49,51) zyklisch steuerbar ist.

7. Ein Meßwandler nach Anspruch 6, dadurch gekennzeichnet, daß der Meßwandler Elemente zur Phasenerkennung hat, die in der Lage sind, den Phasenwinkel eines Minimum- oder Maximumpunktes des Intensitätssignals von dem Durchlaufresonator (41,49,51) aufzulösen.

**Revendications**

1. Transducteur du type Fabry-Perot pour la mesure d'une force, ledit transducteur comprenant :

un corps (15) ;
un élément de détection (27,37) monté élastiquement sur ledit corps (15), ledit élément de détection actionné agissant comme un élément de réception de force dont la déformation par rapport au corps (15) peut être employée pour calculer la force appliquée sur ledit élément de détection (27,37), et
un dispositif de détection optique (1,6,8) pour déterminer la déformation dudit élément de détection (27, 37), ledit dispositif de détection optique (1,6,8) comprenant :
une source de lumière à spectre large (1) optiquement connectée audit résonateur de détection (21,23,33),
un détecteur d'intensité (8), optiquement connecté à ladite source de lumière (1), pour détecter l'intensité de la lumière modifiée par ledit résonateur de détection (21,23,33),
un résonateur de Fabry-Perot à balayage (41,49, 51), optiquement connecté audit résonateur de détection (21,23,33) et à ladite source de lumière (1), ayant une longueur optique réglable dans le but de déterminer la longueur optique du résonateur de détection(21,23,33) qui est proportionnelle à la force (F,F') appliquée sur l'élément de détection (27),

caractérisé en ce que les deux interfèromètres de Fabry-Perot (4,6) sont courts et fonctionnent en mode de réflexion.

**EP 0 571 107 B1**

**2.** Transducteur suivant la revendication 1, caractérisé en ce que ledit résonateur à balayage (41,49, 51) est placé le long du chemin de transmission du rayon lumineux, avant le résonateur de détection (4).

**3.** Transducteur suivant la revendication 1, caractérisé en ce que ledit résonateur à balayage (41,49, 51) contient des éléments de déviation électrostatiques (43,45).

**4.** Transducteur suivant une quelconque des revendications précédentes, caractérisé en ce que le corps (15) sert de substrat pour l'ensemble du transducteur.

**5.** Transducteur suivant la revendication 1, caractérisé en ce que la longueur optique dudit résonateur à balayage (41,49,51) est réglable en temps réel de manière à suivre la longueur optique du résonateur de détection (21,23,33).

**6.** Transducteur suivant la revendication 1, caractérisé en ce que la longueur optique dudit résonateur à balayage (41,49,51) est réglable cycliquement.

**7.** Transducteur suivant la revendication 6, caractérisé en ce que ledit transducteur contient des éléments de détection de phase qui peuvent résoudre l'angle de phase d'un point minimal ou maximal du signal d'intensité fourni par le résonateur à balayage (41,49,51).

8

Fig. 3

Fig. 2

Fig. 4

Fig. 1

Fig. 5

Fig. 6

Fig. 7

Fig. 8

Fig. 9

EP 0 571 107 B1